## Europäisches Patentamt
## European Patent Office
## Office européen des brevets

(19)

(11) Numéro de publication: **0 001 939**
**B1**

(12) **FASCICULE DE BREVET EUROPEEN**

(45) Date de publication du fascicule du brevet: **05.05.82**

(21) Numéro de dépôt: **78400136.4**

(22) Date de dépôt: **16.10.78**

(51) Int. Cl.³: **B 67 B 5/00, B 65 B 7/28, B 65 B 51/14**

(54) Procédé et dispositif de thermoscellage d'opercules sur des récipients en verre.

(30) Priorité: **03.11.77 FR 7733046**

(43) Date de publication de la demande:
**16.05.79 Bulletin 79/10**

(45) Mention de la délivrance du brevet:
**05.05.82 Bulletin 82/18**

(84) Etats contractants désignés:
**BE CH DE GB NL**

(56) Documents cités:
**BE - A - 7 377 713**
**FR - A - 1 440 122**
**GB - A - 1 251 627**
**US - A - 2 422 750**

(73) Titulaire: **SERAC S.A.**
**Route de Mamers B.P. 46**
**F-72400 La Ferté Bernard (FR)**

(72) Inventeur: **Graffin, André Jean-Jacques**
**Route de Mamers**
**F-72400 La Ferté Bernard (FR)**

(74) Mandataire: **Fruchard, Guy et al,**
**NOVAPAT-CABINET CHEREAU 107, boulevard Péreire**
**F-75017 Paris (FR)**

Courier Press, Leamington Spa, England.

Procédé et dispositif de thermoscellage d'opercules sur des récipients en verre

La présente invention concerne la fermeture ou l'obturation de récipients par des opercules, et, plus particulièrement le capsulage étanche de récipients en verre par thermoscellage d'opercules.

La fermeture de récipients en verre, notamment dans les industries laitières s'effectue jusqu'à présent par sertissage de capsules d'aluminium, ces capsules étant serties sur le bourrelet prévu à cet effet sur le col de récipients tels que les bouteilles pour le lait ou les pots de yogourth.

Le sertissage n'est pas étanche et demande des précautions particulières lors de la manipulation. De plus, pour des produits alimentaires tels que le lait, le yogourth ou les crèmes, il présente l'inconvénient de n'être pas étanche et, donc, de laisser la surface du produit contenu dans le récipient en contact avec l'air ambiant, favorisant ainsi la fermentation et l'oxydation de ces produits.

La mise au point des emballages en matière plastique a permis, en utilisant des opercules composites formés d'une couche d'aluminium et d'une couche de matière plastique thermosoudable, d'obtenir la fermeture de tels récipients par soudure autogene ou collage étanche. Lors de l'application de la tête de fermeture sur les cols de tels récipients, un parfait contact s'établit automatiquement entre l'opercule et la surface du col, même si celle-ci n'est pas au préalable parfaitement plane, du fait de l'écrasement de matériau plastique constituant le récipient et de son fluage favorisé par la température de la tête.

L'application de telles techniques pour le scellage sur des cols de récipients en verre pose précisément un problème dans la mesure où ces récipients, qui sont généralement obtenus par moulage, subissent lors du refroidissement des déformations locales non contrôlées, plus particulièrement au niveau du col, de sorte que la partie supérieure de celui-ci n'est pas plane mais le plus souvent dans un plan non parallèle à celui de la base du récipient, la couronne constituant cette surface de col présentant par ailleurs un gauchissement notable pouvant atteindre des variations locales de l'ordre de 3/10ème de millimètre.

Du fait de cette configuration irrégulière des cols de récipients en verre, il n'est pas possible, avec des installations existantes, de réaliser un scellage étanche car pour ce faire il est nécessaire d'avoir un très bon contact entre l'opercule et toute la surface du col.

Pour remédier à cet inconvénient, il a été proposé des dispositifs de scellage utilisant un coussin en matériau élastique susceptible d'absorber les variations locales de niveaux du col de récipient et permettant de transmettre une fore d'application suffisante, dans les conditions de température considérées pour effectuer le thermoscellage.

Toutefois, de tels dispositifs se sont trouvés confrontés au problème de la transmission de la chaleur au travers de ce coussin déformable du fait de la faible conductivité du matériau constitutif de celui-ci. L'adjonction dans ce matériau de substances bonnes conductrices de la chaleur se traduit généralement par une augmentation de la rigidité du coussin nuisible à la qualité requise pour le thermoscellage de récipients notamment contenant des produits liquides ou semi-liquides alimentaires. Avec de tels dispositifs le compromis est délicat à établir entre la souplesse de coussin requise pour ne pas rendre nécessaire l'utilisation de force de pression importantes susceptibles d'endommager les récipients et la bonne conductivité thermique pour ne pas devoir utiliser des sources de puissances trop élevées.

Le brevet belge BE.A.737.713 décrit par ailleurs un procédé et un dispositif pour la fermeture de récipients céramiques en y conservant le vide, utilisant un moyen de membrane se présentant sous la forme d'une collerette métallique emmanchée sur un support central thermiquement conducteur et en appui, par sa frange externe, sur un anneau de matière plastique élastique, les récipients étant fermés par une feuille d'un matériau étanche, après que, sur le bord du récipient, ait été appliquée, à chaud, une couche d'adhésif fusible, le bord dépassant de la feuille pouvant être ultérieurement rabattu.

Le procédé décrit dans ce document nécessite, d'une part, l'enduisage préalable à chaud du col de récipient, et l'application sur le bord du récipient recouvert de la feuille d'obturation d'une collerette métallique en appui sur la bague en matériau élastique analogue, dans son principe, aux coussins déformables des dispositifs antérieurs analysés ci-dessus.

La présente invention a précisément pour objet d'obvier à ces inconvénients en proposant un procédé de thermoscellage d'opercules composites à couche thermoplastique sur des récipients en verre permettant de garantir un scellage parfaitement étanche sur des cols présentant un gauchissement important au moyen d'un dispositif d'une grande robustesse et de faible coût de revient, et susceptible de fonctionner avec des consommations d'énergie minimales.

La présente invention a pour autre objet de proposer un dispositif de thermoscellage pour la mise en oeuvre d'un tel procédé susceptible de convenir à tout type de récipient en verre à fermer, simple à mettre en oeuvre et d'une grande fiabilité.

Pour ce faire, selon la caractéristique de la présente invention, le procédé de thermoscellage consiste à appliquer, à chaud et sous pression, un moyen de membrane sur un opercule placé sur le bord ouvert du récipient, puis à dégager le moyen de membrane de l'opercule scellé sur le récipient, ce procédé comprenant l'étape de placer sur le bord ouvert de récipient un opercule composite constitué d'une feuille d'alliage léger et d'une couche de matériau thermoplastique thermosoudable, avec cette dernière en contact avec le bord du récipient, d'appliquer sur l'opercule en position sur le récipient une membrane souple constituée d'un voile continu de matériau en feuille, tendue par sa périphérie sur un cadre support de dimensions supérieures à celles du bord de récipient, de soumettre au moins la zone périphérique de la face de la membrane opposée à l'opercule à un flux de chaleur contrôlé, et d'appliquer sur cette face de la membrane une surpression par un fluide.

Selon une autre caractéristique de la présente invention, le dispositif pour la mise en oeuvre de ce procédé comprend und membrane souple, tendue par sa périphérie à l'extrémité d'un corps supporté de façon mobile, de moyens caloporteurs aménagés dans ce corps, et des moyens de chauffage pour transmettre, par l'intermédiaire de ces moyens caloporteurs, un flux de chaleur à la face de la membrane opposée à l'opercule à thermosceller.

Selon une caractéristique plus particulière de la présente invention, la membrane est métallique et est tendue sur le corps de façon à pouvoir venir s'appliquer par ladite face opposée à l'opercule sur une surface métallique formée dans le corps, celuici constituant le moyen caloporteur, des moyens d'amenée de fluide sous pression étant prévus pour sélectivement repousser cette membrane de cette surface du corps et l'appliquer sous pression sur le récipient muni de son opercule.

Selon une autre caractéristique particulière de la présente invention la membrane est non-métallique et les moyens caloporteurs sont constitués d'un fluide possédant une bonne conductivité thermique logé dans le corps et baignant la face de la membrane opposée à l'opercule à thermosceller.

D'autres caractéristiques et avantages de la présente invention ressortiront de las description suivante de modes de réalisation particuliers, faite en relation avec les dessins annexés, sur lesquels:

La figure 1 représente de façon schématique, en coupe, un premier mode de réalisation du dispositif de thermoscellage selon la présente invention;

La figure 2 représente de façon schématique, en vue de dessous, la face de contact avec la membrane du corps du dispositif représenté sur la figure 1; et

La figure 3 représente, dans une vue en coupe schématique analogue à celle de la figure 1, un second mode de réalisation de dispositif selon la présente invention.

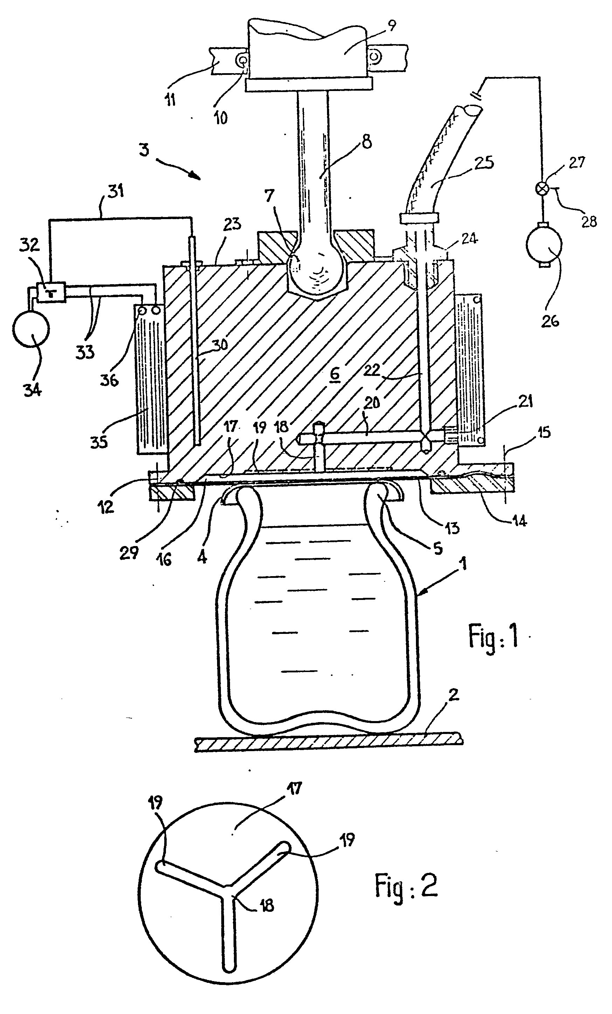

Le dispositif de thermoscellage est représenté sur la figure 1, dans sa configuration monté sur une tête de scellage en un poste de fermeture d'une installation de remplissage de récipients en verre. Un récipient, tel que celui généralement référencé 1, constitué en l'occurrence d'un pot de yogourth, est amené rempli par un dispositif de convoiement dont seul le plan support 2 est partiellement représenté, au-dessous d'une tête de fermeture, généralement référencée dans son ensemble 3 avec le récipient 1 préalablement pourvu d'un opercule thermosoudable 4 mis en place sur le col 5 du récipient. La tête de fermeture 3 est constituée d'un corps 6 en métal, par exemple en acier ou en acier inoxydable, monté de façon articulée au moyen d'une jonction à rotule 7 sur l'extrémité d'une tige 8 d'un vérin 9 actionné par exemple hydrauliquement et solidaire, par exemple par des pattes 10, d'une structure 11 d'un poste de fermeture d'une installation de remplissage, cette structure 11 pouvant faire partie d'un carrousel disposé en aval d'une chaîne de remplissage.

Le corps 6 a une forme générale de préférence cylindrique et forme à son extrémité inférieure, opposée à la tige de piston 8, une collerette 12, sur laquelle est tendue une membrane 13, au moyen d'une bride annulaire 14 fixée à la collerette 12 par exemple au moyen de vis représentée schématiquement en 15. Le corps est conformé de façon à ménager au-dessus de la membrane 13, constituée en l'occurrence d'une fine plaque métallique, par exemple d'acier, une chambre cylindrique de faible épaisseur 16 ayant un diamètre supérieur à celui de col 5 du récipient à sceller considéré.

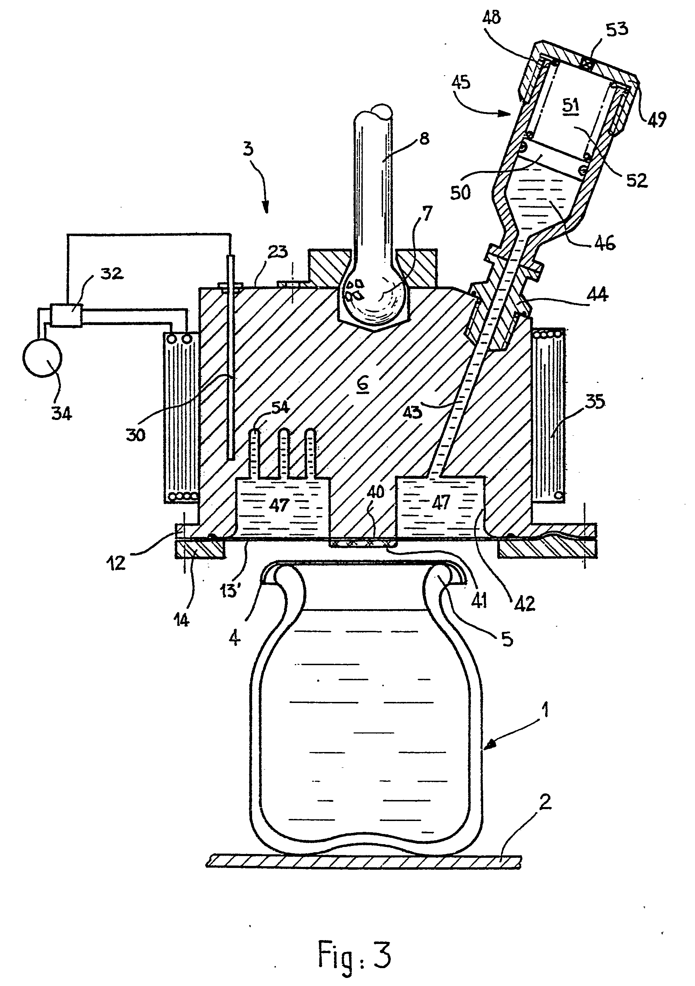

Le chambre 16 est définie à sa partie supérieure par une surface sensiblement plane 17 dans laquelle débouche un alésage central 18 et dans laquelle sont formées des rainures s'étendant radialement 19, par exemple au nombre de trois et équidistantes de 120° (figure 2) communiquant avec l'alésage 18. L'alésage 18 communique à son autre extrémité avec un alésage radial 20 obturé à son extrémité de perçage par un bouchon ou tampon 21. Un alésage 22, par exemple parallèle à l'alésage central 18, établit une communication entre l'alésage 20 et la face supérieure 23 du corps 6. Un raccord 24 vissé dans la paroi supérieure 23 de corps 6 permet de raccorder l'alésage 22 à une canalisation d'amenée d'air sous pression 25 reliée à un compresseur ou une source de pression 26 par une électrovanne 27 dont l'entrée électrique 28 peut être connectée à un dispositif de commande (non représenté) permettant de faire fonctionner cette vanne en synchronisation avec les éléments du poste de fermeture considéré.

Un joint torique 29 peut être prévu entre la périphérie bridée de la membrane 13 et le corps 6. Dans ce corps 6 est ègalement noyée une sonde de température 30, par exemple constituée d'un thermocouple cuivre-constantan, susceptible d'être raccordée par une ligne 31 à un dispositif de régulation en température du type thermostat 32 interposé dans les lignes 33 reliant une source de puissance électrique 34 à un collier chauffant 35 entourant le corps 6 et constitué d'une pluralité d'enroulements de conducteurs électriques 36.

La mise en oeuvre du dispositif décrit s'opère comme suit: la tête 3 étant en position haute, c'est-à-dire la tige du vérin 8 étant rétractée par des moyens de commande de vérin non représentées, le dispositif de convoiement 2 amène un récipient 1 sur lequel a été préalablement déposé avec ses bords rabattus un opercule 4 à l'aplomb de la tête 3. Le vérin 9 est alors mis en oeuvre pour descendre la tête 3 de façon que la membrane 13 vienne tout d'abord en contact avec l'opercule 4 sur le col 5 du récipient, le mouvement descendant étant poursuivi jusqu'à ce que la membrane 13, en appui sur le récipient 1, vienne en contact avec la face 17 du corps 6. Le mouvement de descente est alors interrompu. Le corps 6 est maintenu à une température d'environ 250° par le collier chauffant 35 de sorte qu'il s'établit un montée en température de la membrane 13 en contact avec la face chaude 17 du corps 6. Du fait de la faible inertie thermique de la membrane 13, celle-ci est portée dans un délai de l'ordre de 2 à 3 secondes à la température requise pour le thermoscellage de la couche thermoplastique de l'opercule 4 sur le récipient 1 L'électrovanne 27 est alors actionnée pour envoyer par la canalisation 25, les passages 22, 20, 18 et les rainures 19, une pression d'air comprimé de. l'ordre de 2,5 à 3 kg/cm² sur la face supérieure de la membrane 13 afin d'exercer sur l'opercule 4 la pression requise pour son scellage sur le récipient 1. La vanne 27 est ensuite fermée et la tête 3 est remontée par actionnement du vérin 9 pour revenir dans sa position haute, tandis que le récipient 1 ainsi fermé est évacué et un nouveau récipient 1 est amené en position de scellage.

On a représenté sur la figure 3, un autre mode de réalisation du dispositif de thermoscellage selon la présente invention. Sur cette figure, les éléments identiques à ceux de mode de réalisation représenté sur la figure 1 portent les mêmes références. Ce mode de réalisation so distingue de précédent par le fait que la membrane 13' est cette fois constituée d'un matériau non métallique, par exemple un tissu de fibres de verre revêtu de polytétrafluoroéthylène. Cette membrane 13' est également tendue entre la collerette 12 du corps 6 et la bride 14 de fixation mais porte cette fois, par sa face supérieure, sur une surface centrale 40 du corps 6, cette surface centrale 40 s'étendant dans le même plan que le plan de liaison entre la collerette 12 et la bride 14. En regard de cette surface 40, est fixée, par exemple par collage sur la partie centrale de la membrane, une pièce cylindrique d'entretoise 41.

Une chambre annulaire 42, dont les rayons sont déterminés en fonction du diamètre du récipient 1 à fermer, est formée dans le corps 6 autour de la partie centrale définissant la surface d'appui 40. Un alésage 43, formé dans la masse de corps 6, établit une communication entre cette chamber 42 et la partie supérieure du corps 6, un raccord 44 vissé dans le corps 6 servant à supporter un vase d'expansion, généralement référencé 45, et à mettre en communication la chambre de travail 46 dans ce vase d'expansion avec la chambre 42.

La chambre 42 est remplie d'un fluide caloporteur 47, constitué par exemple par de l'huile, maintenu sous une légère surpression au moyen du ressort 48 prenant appui sur le couvercle 49 du vase d'expansion 45 et repoussant le piston 50 de ce vase d'expansion. En variante, ou concomitamment du ressort 48, un gaz inerte sour pression 51, par exemple de l'azote peut être prévu dans la seconde chambre 52 du vase d'expansion 45, un clapet de sécurité 53 étant prévu dans le chapeau 49 du vase d'expansion.

Dans ce mode de réalisation, à la différence du mode de réalisation précédent, la membrane 13 ayant une conductibilité thermique nettement inférieure à celle de la membrane métallique 13', est maintenue continuellement en température par le bain d'huile 47 dans le logement 42. Par ailleurs, l'élasticité de cette membrane en matière synthétique étant plus grande que celle d'une membrane métallique, l'adjonction de la pièce d'entretoise 41 permet de réaliser une déformation torique de la zone annulaire non supportée de cette membrane lors de sa venue en pression sur le col 5 du récipient 1 de façon à en mieux épouser le contour arrondi, la contre-pression développée par le fluide incompressible 47 permettant de réaliser cette fois en une seule étape l'application et le chauffage de l'opercule thermosoudable 4 sur le col 5 du récipient. Afin d'effectuer un meilleur échange de chaleur entre la masse du corps 6 et le fluide 47, la chambre annulaire 42 peut être pourvue de rainures 54 pénétrant dans la masse du corps 6 et réalisées par exemple par électro-érosion.

Dans ce mode de réalisation, le récipient à fermer 1 est amené au-dessous de la tête 3 en position haute, et celle-ci est descendue en une seule fois sur le récipient 1 pour réaliser simultanément la fusion de la couche thermoplastique de la capsule et son application par pression sur le col 5 du récipient, la durée d'une passe de fermeture étant de l'ordre de trois secondes.

Quoique la présente invention ait été décrite en relation avec des modes de réalisation préférés, elle ne s'en trouve pas limitée mais elle est au contraire susceptible de modifications et de variantes qui apparaîtront à l'homme de l'art. En particulier, en place et lieu d'air comprimé dans le premier mode de réalisation représenté sur les figures 1 et 2 et pour mieux encore effectuer un transfert thermique entre le corps et la membrane, le fluide sous pression peut être constitué d'un liquide tel que de l'huile. De même au lieu que les moyens de chauffage soient constitués d'un collier chauffant sur la périphérie du corps 6, ceux-ci peuvent être intégrés dans le corps 6 et peuvent être constitués, en place et lieu de l'enroulement électrique, de canalisations de transport d'un liquide ou d'une vapeur à haute température ou encore de moyens générateurs de micro-ondes. Enfin, selon les dimensions des récipients à obturer et les pressions de travail requises, la surface centrale 40 peut être supprimée, ainsi que la pièce d'entretoise, la chambre de fluide pouvant être alors cylindrique, de forme quelconque, mais toujours avec une portion annulaire correspondant au diamètre de l'orifice à obturer. L'obturation d'orifices formés dans des parois non planes, par exemple convexes, peut également être obtenue avec une telle configuration de dispositif selon la présente invention.

**Revendications**

1. Procédé de thermoscellage d'opercules (4) sur des récipients en verre (1), en appliquant, à chaud et sous pression, un moyen de membrane (13) sur un opercule (4) placé sur le bord ouvert du récipient (1), puis en dégageant le moyen de membrane (13) de l'opercule scellé sur le récipient, caractérisé en ce qu'il comprend l'étape de placer sur le bord ouvert (5) du récipient un opercule composite (9) constitué d'une feuille d'alliage léger et d'une couche de matériau thermoplastique thermosoudable, avec cette dernière en contact avec le bord (5) du récipient, d'appliquer sur l'opercule (4) en position sur le récipient (1) une membrane souple (13) constituée d'un voile continu de matériau en feuille, tendue par sa périphérie sur un cadre support (12) de dimensions supérieures à celles du bord (5) du récipient, de soumettre au moins la zone périphérique de la face de la membrane opposée à l'opercule (4) à un flux de chaleur contrôlé, et d'appliquer sur cette face de la membrane une surpression par un fluide.

2. Procédé selon la revendication 1, caractérisé en ce que le flux de chaleur est transmis par un fluide caloporteur maintenu en contact avec ladite face de la membrane (13).

3. Procédé selon la revendication 2, caractérisé en ce que la membrane (13) est non-métallique et étanche, le fluide étant confiné dans un logement formé dans un corps (6) supporté de façon articulée et mobile, l'une des extrémités de ce corps constituant le cadre support de la membrane.

4. Procédé selon la revendication 1, caractérisé en ce que la membrane (13) est métallique, le flux de chaleur étant essentiellement transmis par venue en contact de ladite face de la membrane avec un accumulateur thermique (6) solide lors de l'étape d'application de cette membrane (13) sur l'opercule.

5. Procédé selon la revendication 4, caractérisé en ce que l'application de la membrane (13) sur l'opercule (4) en position sur le récipient (1) s'effectue dans un premier temps par déplacement du corps mobile (6) vers le récipient (1) pour amener ladite face de la membrane (13) en contact avec une paroi adjacente du corps (6), et dans un deuxième temps, par application, sur ladite face de la membrane, d'une pression de fluide.

6. Procédé selon l'une quelconque des revendications 1 à 4, caractérisé en ce que le flux de chaleur est généré par des moyens de résistance électrique (35, 36).

7. Dispositif pour le thermoscellage d'opercules (4) composites sur des récipients (1) en verre selon le procédé de la revendication 1, comprenant: un corps (6) de tête de scellage (6) comportant des moyens de chauffage (35); un moyen de membrane (13); des moyens pour amener au moins temporairement le moyen de membrane (13) en relation de conduction thermique avec les moyens de chauffage (35); et des moyens pour amener sélectivement en contact de pression le moyen de membrane (13) avec un opercule (4) en un poste constitué d'une feuille d'alliage léger et d'une couche de matériau thermoplastique thermosoudable positionné sur l'ouverture (5) du récipient, caractérisé en ce qu'il comprend une membrane souple (13) constituée d'un voile continu de matériau en feuille d'epaisseur sensiblement uniforme sur toute sa surface, tendue par sa périphérie sur un cadre support (12) rigide de dimensions supérieures à celles du bord ouvert (5) du récipient, et des moyens dans le corps (6) pour soumettre au moins temporairement la face de la membrane opposée à l'opercule à un fluide en surpression.

8. Dispositif selon la revendication 7, caractérisé en ce que la membrane (13) est tendue à une extrémité du corps (6) qui est supporté de façon mobile et articulée, des moyens caloporteurs étant aménagés dans ce corps.

9. Dispositif selon la revendication 8, caractérisé en ce que la membrane (13) est non-métallique et étanche, les moyens caloporteurs comprenant notamment un fluide ayant une bonne conductivité thermique confiné dans un logement formé dans ce corps (6) et baignant ladite face de la membrane (13).

10. Dispositif selon la revendication 7 ou la revendication 9, caractérisé en ce que la membrane (13) est métallique, et en ce qu'une chambre plane (16) de faible épaisseur est formée entre laide face de la membrane (13) et une surface plane adjacente du corps (6), ce corps (6) formant une masse métallique caloporteuse.

11. Dispositif selon la revendication 10, caractérisé en ce que des conduits d'amenée de fluide sous pression débouchent dans cette chambre plane 16 du corps.

12. Dispositif selon la revendication 11, caractérisé en ce que les conduits débouchent dans des rainures (19) formées radialement dans la surface de cette chambre (16).

13. Dispositif selon la revendication 9, caractérisé en ce que la chambre (16) a une forme annulaire correspondant à la configuration de l'ouverture (5) du récipient à sceller et débouchant sur une portion annulaire de ladite face de la membrane (13).

14. Dispositif selon la revendication 9 ou la revendication 14, caractérisé en ce qu'il comporte un dispositif d'expansion (45) à piston (50) sollicité élastiquement raccordé à la chambre (16).

15. Dispositif selon l'une quelconque des revendications 8 à 14, caractérisé en ce que le corps (6) est monté par une articulation à rotule (7) sur l'extrémité d'une tige (8) de vérin (9) commandable.

16. Dispositif selon l'une quelconque des revendications 7 à 15, caractérisé en ce que les moyens de chauffage sont constitués par une résistance électrique (35).

17. Dispositif selon la revendiction 16, caractérisé en ce qu'il comporte une sonde de température (30) susceptible d'être raccordée à un dispositif de régulation thermique (32) disposé entre la résistances électriques (35) et une source de puissance électrique (34).

**Claims**

1. Method for heat-sealing heat-sealable composite lids onto glass containers by applying in a heated condition and under pressure a membrane means onto a lid in position on the apertured edge of the container and by separating the membrane means from the lid sealded onto the container, characerized in that it comprises the steps of positioning onto the apertured edge of the container a composite lid consisting in a laminate of ductile light alloy and in a layer of heat-sealable plastic material, said latter layer contacting the edge of the container, of applying onto said lid in position on said container a flexible membrane consisting of a continuous extension of a sheet material stretchingly supported by its outer periphery on a supporting frame having dimensions greater than that of the edge of the container, of submitting at least the peripheral zone of the face of the membrane opposite to the lid to a controlled heat flow, and of applying onto said face of the membrane a pressurized fluid.

2. Method according to claim 1, characterized in that the heat flow is transmitted by a heat transfer fluid maintained into contact with said face of the membrane.

3. Method according to claim 2, characterized in that the membrane is non-metallic and tight, the fluid being confined within a recess formed in a hingedly moveably supported body, one end of said body forming the supporting frame for the membrane.

4. Method according to claim 1, characterized in that the membrane is metallic, the heat flow being essentially transmitted by having said face of the membrane coming into contact with a solid thermal accumulator during the step where the membrane is applied onto the lid.

5. Method according to claim 4, wherein the application of the membrane on the container is obtained in a first step by a relative displacement of the movable body toward the container so as to bring said face of said membrane into contact with an adjacent wall of the body, and, in a second step, by applying onto said face of said membrane a fluid under pressure.

6. Method according to any of claims 1 to 5, characterized in that the heat flow is generated by electrical resisting means.

7. Device for heat-sealing composite lids onto glass containers according to the method of claim 1, which comprises: a sealing head body including heating means; a membrane means; a means for bringing at least temporarily the membrane means into thermal conduction relationship with the heating means; and means for bringing selectively the membrane means into pressure contact with a lid consisting in a foil of a light alloy and in a layer of a heat-sealable thermo-plastic material in position on an opening of a container, characterized in that it comprises a flexible membrane (13;13') constituted of a continuous extension of a sheet material having a substantially uniform thickness all over its surface and stretchingly supported by its periphery onto a rigid supporting frame (12,14) having dimensions greater than that of the open edge (5) of the container (1), and means (22;47) in the body (6) for submitting at least temporarily the face of the membrane opposite to the lid (4) to a pressurized fluid.

8. Device according to claim 7, characterized in that the membrane (13;13') is stretchingly supported at one end (14) of the body (6) which is hingedly and moveably supported, heat transfer means (6;47) being provided within the body.

9. Device according to claim 8, characterized in that the membrane (13') is non metallic and tight, the heat transfer means comprising a fluid (47) showing a good thermal conductivity confined within a recess (42) formed in the body (6) and contacting said face of the membrane.

10. Device according to claim 7 or to claim 8, characterized in that the membrane (13) is metallic and in that a closed chamber of reduced thickness (16) is formed between said face of the membrane and an adjacent flat surface (17) of the body (6), said body forming a heat transfer metallic mass.

11. Device according to claim 10, characterized in that conduits for feeding pressurized fluid open into said flat chamber (16) of the body.

12. Device according to claim 11, characterized in that the conduits open into radially extending grooves (19) formed in the surface of said chamber (16).

13. Device according to claim 9, characterized in that the recess (42) has an annular shape corresponding to the shape of the opening (5) of the container to be sealed and opens onto an annular portion of said face of the membrane (13').

14. A device according to claim 9 or to claim 13, characterized in that it comprises an expansion device (45) including a resiliently biased piston (50) communicating with said recess (42).

15. Device according to any of claims 8 to 14, characterized in that the body (6) is supported by a hinge joint (7) at the end of a rod (8) of a controllably actuable cylinder (9).

16. Device according to any of claims 7 to 15, characterized in that the heating means comprises an electrical resistor (35).

17. Device according to claim 16, characterized in that it comprises a temperature probe (30) adapted for connection to a heat regulating device (32) arranged between the electrical resistor (35) and an electrical power source (34).

**Patentansprüche**

1. Verfahren zum thermischen Verschließen von Glasbehältern mit Deckeln durch Aufbringen unter Wärmeeinwirkung und unter Druck eines Membranteils auf einen auf den offenen Rand des Behälters angeordneten Deckel und durch Entfernen des Membranteils von den mit dem Behälter fest verbundenen Deckeln, dadurch gekennzeichnet, daß auf den offenen Rand des Behälters ein zusammengesetzter Deckel aufgebracht wird, der aus einer Folie einer Leichtmetallegierung und aus einer Schicht eines wärmeverformbaren thermoplastischen Materials besteht, wobei letztere den Rand des Behälters berührt, daß auf den auf den Behälter aufgebrachten Deckel eine biegsame Membran aufgebracht wird, die aus einer kontinuierlichen Bahn eines Folienmaterials besteht und deren Rand von einem Halterahmen gespannt wird, dessen Abmessungen größer als diejenigen des Behälterrandes sind, daß wenigstens der Umfangsbereich der dem Deckel gegenüberliegenden Membranfläche einer gesteuerten Wärmeeinwirkung unterworfen wird und daß auf diese Membranfläche von einem Fluid ein Überdruck ausgeübt wird.

2. Verfahren nach Anspruch 1, dadurch gekennzeichnet, daß die Wärmemenge von einem wärmetransportierenden Fluid übertragen wird, das die genannte Membranfläche beaufschlagt.

3. Verfahren nach Anspruch 2, dadurch gekennzeichnet, daß die Membran aus einem Nichtmetall besteht und dicht abschließt und daß das Fluid in eine Aussparung gelangt, welche in einem gelenkig und beweglich gelagerten Bauteil vorgesehen ist, wobei ein Ende dieses Bauteils den Halterahmen der Membran bildet.

4. Verfahren nach Anspruch 1, dadurch gekennzeichnet, daß die Membran metallisch ist und daß die Wärmemenge in wesentlichen durch Beaufschlagung der Membranfläche mit einem festen Wärmespeicher während des Aufbringens der Membran auf dem Deckel erfolgt.

5. Verfahren nach Anspruch 4, dadurch gekennzeichnet, daß das Aufbringen der Membran auf den auf den Behälter aufgelegten Deckel durch Verschieben des beweglichen Bauteils in Richtung zum Behälter hin erfolgt, so daß die Membranfläche mit einer benachbarten Wand des Bauteils in Berührung kommt, und daß anschließend auf die Membranfläche ein Fluiddruck ausgeübt wird.

6. Verfahren nach einem der Ansprüche 1 bis 5, dadurch gekennzeichnet, daß die Wärmemenge von einer elektrischen Widerstandsanordnung erzeugt wird.

7. Vorrichtung zum Verschließen von Glasbehältern mit zusammengesetzten Deckeln nach dem Verfahren gamäß Anspruch 1, die folgende Teile aufweist: einen Verschlußkopf mit einer Heizanordnung; ein Membranteil; Anordnungen um wenigstens zeitweise das Membranteil in wärmeleitende Verbindung mit der Heizanordnung zu bringen; sowie eine Anordnung um wahlweise das Membranteil in Druckkontakt mit dem Deckel zu bringen, wobei letzterer aus einer Schicht einer Leichtmetallegierung und aus einer Schicht eines wärmeverformbaren thermoplastischen Materials besteht und auf einer Öffnung des Behälters angeordnet ist, dadurch gekennzeichnet, daß sie eine biegsame Membran (13, 13') aufweist, die aus einer Bahn eines Folienmaterials mit im wesentlichen gleichförmiger Dicke über ihre gesamte Fläche besteht, daß sie entlang des Umfangs von einem steifen Halterahmen (12, 14) gespannt ist, dessen Abmessungen größer als diejenigen des offenen Randes (15) des Behälters (1) sind, und daß im Bauteil (6) Anordnungen (22, 47) vorgesehen sind um wenigstens zeitweise die dem Deckel (4) gegenüberliegende Membranfläche von einem Fluid unter Überdruck zu beaufschlagen.

8. Vorrichtung nach Anspruch 7, dadurch gekennzeichnet, daß die Membran (13, 13') von einem Ende (12) des bei 7 gelenkig und beweglich angeordneten Bauteils (6) gespannt ist, und daß wärmeübertragende Anordnungen (6, 47) im Bauteil vorgesehen sind.

9. Vorrichtung nach Anspruch 8, dadurch gekennzeichnet, daß die Membran (13') aus einem Nichtmetall besteht und dicht abschließt, und daß die wärmeübertragenden Anordnungen insbesondere ein Fluid (47) mit einer hohen thermischen Leitfähigkeit aufweisen, das in einer Aussparung (42) im Bauteil (6) vorgesehen ist und die Membranfläche beaufschlagt.

10. Vorrichtung nach Ansprüchen 7 oder 8, dadurch gekennzeichnet, daß die Membran (13) metallisch ist und daß zwischen der Membranfläche und einer benachbarten Ebene (17) des Bauteils (6) eine geschlossene Kammer (16) geringer Dicke vorgesehen ist, wobei das Bauteil eine wärmeübertragende metallische Masse ist.

11. Vorrichtung nach Anspruch 10, dadurch gekennzeichnet, daß die Zuführleitungen für das Druckfluid in dieser ebenen Kammer (16) des Bauteils münden.

12. Vorrichtung nach Anspruch 11, dadurch gekennzeichnet, daß die Leitungen in Nuten (19) münden, die radial in der Oberfläche der Kammer (16) vorgesehen sind.

13. Vorrichtung nach Anspruch 9, dadurch gekennzeichnet, daß die Aussparung (42) ringförmig ist entsprechend der Ausgestaltung der Offnung (5) des zu verschließenden Behälters, und an einer ringförmigen Stelle der Membranfläche (13') mündet.

14. Vorrichtung nach Ansprüchen 9 oder 13, dadurch gekennzeichnet daß sie eine Expansionsanordnung (45) aufweist mit einem Kolben (50), der elastisch beaufschlagt ist und mit der Aussparung (42) verbunden ist.

15. Vorrichtung nach einem der Ansprüche 8 bis 14, dadurch gekennzeichnet, daß das Bauteil (6) mittels eines Kugelgelenks (7) am Ende eines Schaftes (8) einer Steuerbaren Hebevorrichtung (9) angeordnet ist.

16. Vorrichtung nach einem der Ansprüche 7 bis 15, dadurch gekennzeichnet, daß die Heizanordnung aus einem elektrischen Widerstand (35) besteht.

17. Vorrichtung nach Anspruch 16, dadurch gekennzeichnet, daß sie einem Temperaturfühler (30) aufweist, der mit einer thermischen Steueranordnung (32) verbindbar ist, welche zwischen dem elektrischen Widerstand (35) und einer elektrischen Energeiquelle (34) vorgesehen ist.

Fig : 1

Fig : 2

Fig. 3